(19) Europäisches Patentamt / European Patent Office / Office européen des brevets

(11) **EP 2 940 991 B1**

(12) **FASCICULE DE BREVET EUROPEEN**

(45) Date de publication et mention
de la délivrance du brevet:
**27.09.2017 Bulletin 2017/39**

(51) Int Cl.:
*H04N 5/33* *(2006.01)*          *G01J 5/22* *(2006.01)*
*H04N 5/365* *(2011.01)*

(21) Numéro de dépôt: **15164692.4**

(22) Date de dépôt: **22.04.2015**

(54) **PROCÉDÉ DE TRAITEMENT D'UNE IMAGE INFRAROUGE POUR UNE CORRECTION DES NON UNIFORMITÉS**

VERFAHREN ZUR VERARBEITUNG EINES INFRAROT-BILDES FÜR EINE KORREKTUR VON UNGLEICHMÄSSIGKEITEN

METHOD FOR PROCESSING AN INFRARED IMAGE FOR CORRECTION OF NON-UNIFORMITIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1453917**

(43) Date de publication de la demande:
**04.11.2015 Bulletin 2015/45**

(73) Titulaire: **ULIS**
**38113 Veurey Voroize (FR)**

(72) Inventeurs:
• **Saragaglia, Amaury**
**38320 EYBENS (FR)**
• **Durand, Alain**
**38500 VOIRON (FR)**

(74) Mandataire: **Thibon, Laurent**
**Cabinet Beaumont**
**1, rue Champollion**
**38000 Grenoble (FR)**

(56) Documents cités:
**EP-A2- 2 632 150          WO-A1-2008/081165**
**WO-A2-2004/107728          US-A1- 2010 085 438**
**US-A1- 2013 314 536**

**Description**

Domaine

La présente invention concerne le domaine des capteurs d'image infrarouge, et en particulier un procédé et un dispositif pour réaliser des corrections de décalage et de gain dans une image captée par une matrice de pixels sensibles à la lumière infrarouge.

Arrière-plan

Dans le domaine de l'imagerie infrarouge (IR), réaliser une correction du décalage dans des images captées, sans utiliser d'obturateur ou de matériel similaire, constitue un défi important pour des dispositifs non refroidis d'imagerie infrarouge, tels que des bolomètres, et aussi pour des dispositifs refroidis d'imagerie infrarouge. De tels dispositifs d'imagerie comprennent une matrice de détecteurs sensibles à l'infrarouge formant une matrice de pixels.

Une non uniformité spatiale entre les pixels de la matrice de pixels, qui provoque le décalage à corriger dans l'image, varie non seulement dans le temps mais aussi en fonction de la température. Ce problème est généralement traité en utilisant un obturateur mécanique interne dans le dispositif d'imagerie, et implique de capter périodiquement une image pendant que l'obturateur est fermé dans le but d'obtenir une image de référence d'une scène relativement uniforme qui peut ensuite être utilisée pour un étalonnage. Cependant, l'utilisation d'un obturateur présente plusieurs inconvénients, tels qu'un poids et un coût supplémentaires, et une fragilité de ce composant. De plus, pour certaines applications, l'utilisation d'un obturateur est inacceptable en raison du temps qui est perdu pendant que l'obturateur est fermé et que l'étalonnage est effectué. Pendant cette durée d'étalonnage, aucune image de la scène ne peut être captée.

Des techniques de traitement d'image pour corriger le décalage ont été proposées comme alternative à l'utilisation d'un obturateur. Cependant, les techniques existantes sont complexes et/ou ne corrigent pas suffisamment l'image. Il existe donc un besoin dans la technique d'un procédé amélioré de correction du décalage dans une image infrarouge.

La demande de brevet US publiée sous le numéro Uns2010/0085438 concerne des systèmes et procédés pour faciliter l'atténuation de décalages entre les gains de colonnes dans un capteur d'image CMOS dans un système sur puce (iSoC).

La demande de brevet publiée sous le numéro WO2004/107728 concerne un capteur d'image ayant un capteur de température.

La demande de brevet européen publiée sous le numéro EP 2632150, au nom du présent déposant, décrit un procédé de correction de la dérive d'un détecteur de rayonnement infrarouge comportant une matrice de bolomètres résistifs d'imagerie.

Résumé

Un objet des modes de réalisation de la présente invention est de résoudre au moins partiellement un ou plusieurs des inconvénients de l'état de l'art antérieur.

Selon un aspect, on prévoit un procédé de traitement d'image comprenant : recevoir, par un dispositif de traitement, une image d'entrée captée par une matrice de pixels sensibles à l'infrarouge, la matrice de pixels comportant plusieurs colonnes de pixels, chaque colonne de pixels étant associée à un pixel de référence correspondant ; déterminer, en se basant sur l'image d'entrée et sur un vecteur de composante de colonnes représentant une variation entre colonnes introduite par les pixels de référence, un premier facteur d'échelle en estimant le niveau de la variation entre colonnes présente dans l'image d'entrée ; générer des valeurs de décalage de colonnes en se basant sur le produit du premier facteur d'échelle par les valeurs du vecteur ; déterminer, en se basant sur l'image d'entrée et sur une matrice de dispersion 2D représentant une dispersion 2D introduite par la matrice de pixels, un second facteur d'échelle en estimant le niveau de la dispersion 2D présente dans l'image d'entrée ; générer des valeurs de décalage de pixels en se basant sur le produit du second facteur d'échelle par les valeurs de la matrice ; et générer une image corrigée en appliquant les valeurs de décalage de pixels et de colonnes.

Selon un mode de réalisation, le procédé comprenant en outre la génération d'une image partiellement corrigée en se basant sur les valeurs de décalage de colonnes, dans lequel le second facteur d'échelle est généré en se basant sur l'image partiellement corrigée.

Selon un mode de réalisation, le vecteur de colonnes et la matrice de dispersion sont déterminés en se basant sur une image de référence représentant des décalages introduits par la matrice de pixels et les pixels de référence associés.

Selon un mode de réalisation, l'image corrigée est générée en se basant sur l'équation : $I_c' = I_B(x,y) — \alpha I_{COL}(x,y) - \beta I_{DISP}(x, y)$ où $I_B(x,y)$ est l'image d'entrée, $\alpha$ est le premier facteur d'échelle, $I_{COL}(x,y)$ est une matrice comprenant dans chacune de ses lignes le vecteur de colonnes, β est le second facteur d'échelle, et $I_{DISP}(x,y)$ est la matrice de dispersion.

Selon un mode de réalisation, le vecteur de colonnes représente la différence entre un premier vecteur de colonnes basé sur une première image de référence prise à une première température ambiante et un second vecteur de colonnes basé sur une seconde image de référence prise à une seconde température ambiante ; la matrice de dispersion représente la différence entre une première matrice de dispersion basée sur la première image de référence et une seconde matrice de dispersion basée sur la seconde image de référence.

Selon un mode de réalisation, l'image corrigée est générée en se basant sur l'équation :

$$I'_C = I_B(x,y) - I^{T0}_{COL}(x,y) - I^{T0}_{DISP}(x,y) - \alpha(I'_{COL}(x,y)) - \beta(I'_{DISP}(x,y))$$

où $I_B(x,y)$ est l'image d'entrée, α est le premier facteur d'échelle, $I^{T0}_{COL}(x,y)$ est une matrice comprenant dans chacune de ses lignes, le premier vecteur de colonnes, $I'_{COL}(x,y)$ est une matrice égale à $I'_{COL} = (I^{T1}_{COL} - I^{T0}_{COL})$ où $I^{T1}_{COL}$ est une matrice comprenant dans chacune de ses lignes le second vecteur de colonnes, β est le second facteur d'échelle, $I^{T0}_{DISP}(x,y)$ est la première matrice de dispersion et $I'_{DISP}(x,y)$ est une matrice égale à $I'_{DISP} = (I^{T1}_{DISP} - I^{T0}_{DISP})$ où $I^{T1}_{DISP}$ est la seconde matrice de dispersion.

Selon un mode de réalisation, le procédé comprend en outre la détermination d'au moins une valeur de décalage de résidus de colonnes en se basant sur l'image corrigée.

Selon un mode de réalisation, la détermination de la au moins une valeur de décalage de résidus de colonnes comprend : déterminer des poids associés à au moins certains des pixels de la image corrigée, les poids étant générés en se basant sur une estimation de l'uniformité du voisinage de chacun des au moins certains pixels ; calculer, pour chacun des au moins certains pixels, la différence par rapport à une valeur de pixel dans la ligne correspondante d'une colonne adjacente ; et appliquer les poids aux différences et intégrer les différences pondérées pour générer la au moins une valeur de décalage de résidus de colonnes.

Selon un mode de réalisation, l'estimation de l'uniformité du voisinage de chacun des au moins certains pixels est basée sur une valeur de gradient et sur une valeur de variance horizontale calculées pour chaque voisinage.

Selon un mode de réalisation, la détermination du premier facteur d'échelle comprend : appliquer un filtre passe-haut le long des lignes de l'image ; appliquer le filtre passe-haut au vecteur de colonnes ; et déterminer des moyennes de colonnes de l'image filtrée, le premier facteur d'échelle étant déterminé en se basant sur une minimisation des différences entre les moyennes de colonnes de l'image filtrée et les valeurs filtrées du vecteur de colonnes.

Selon un mode de réalisation, le premier facteur d'échelle α est déterminé en se basant sur l'équation suivante :

$$\alpha = \frac{\sum_x \left( \frac{1}{m} \sum_y T(I_B(x,y)) \times T(V_{COL}(x)) \right)}{\sum_x T(V_{COL}(x)) \times T(V_{COL}(x))}$$

où T() représente un filtrage passe-haut appliqué au vecteur de colonnes $V_{COL}$ et aux lignes de l'image d'entrée $I_B(x,y)$ .

Selon un mode de réalisation, la détermination du second facteur d'échelle comprend : déterminer, pour chaque pixel de l'image d'entrée et pour chaque élément de la matrice de dispersion, une valeur de gradient en se basant sur au moins un pixel adjacent, le second facteur d'échelle étant déterminé en se basant sur une minimisation de la différence entre les gradients de l'image d'entrée et les gradients de la matrice de dispersion.

Selon un mode de réalisation, le second facteur d'échelle est déterminé en se basant sur l'équation suivante :

$$\beta = \frac{\sum (\nabla_x I_B \cdot \nabla_x I_{DISP} + \nabla_y I_B \cdot \nabla_y I_{DISP})}{\sum ((\nabla_x I_{DISP})^2 + (\nabla_y I_{DISP})^2)}$$

où $I_B$ est l'image d'entrée, $I_{DISP}$ est la matrice de dispersion, $\nabla_x$ est la valeur du gradient de pixel entre des pixels adjacents dans la direction des lignes dans l'image d'entrée, et $\nabla_y$ est la valeur de gradient de pixel dans la direction des colonnes dans l'image d'entrée.

Selon un mode de réalisation, les valeurs de décalage de colonnes et de pixels sont appliquées à une image d'entrée supplémentaire.

Selon un mode de réalisation, le procédé comprend en outre la détermination d'une valeur de correction de gain obtenue en résolvant le problème de minimisation suivante :

$$\gamma = \arg min\left(var(Gain \times I_C' - \gamma \times Gain)\right)$$

où var est la variance, $I_C'$ est l'image corrigée, et Gain est une matrice de gain.

Selon un autre aspect, on prévoit un dispositif de traitement d'image comprenant : une mémoire stockant un vecteur de colonnes représentant une variation entre colonnes introduite par la matrice de pixels, et une matrice de dispersion représentant une dispersion 2D introduite par la matrice de pixels ; un dispositif de traitement adapté pour : recevoir une image d'entrée captée par une matrice de pixels sensibles à l'infrarouge, la matrice de pixels ayant plusieurs colonnes de pixels dont chacune est associée à un pixel de référence ; déterminer, en se basant sur le vecteur de colonnes, un premier facteur d'échelle en estimant un niveau de la variation entre colonnes présente dans l'image d'entrée ; générer des valeurs de décalage de colonnes en se basant sur le produit du premier facteur d'échelle par les valeurs du vecteur ; déterminer, en se basant sur la matrice de dispersion, un second facteur d'échelle en estimant le niveau de la dispersion 2D présente dans l'image d'entrée ; générer des valeurs de décalage de pixels en se basant sur le produit du second facteur d'échelle par les valeurs de la matrice ; et générer une image corrigée en appliquant les valeurs de décalage de colonnes et de pixels.

## Brève description des dessins

Les caractéristiques et avantages susmentionnés, et d'autres, apparaîtront clairement à la lecture de la description détaillée suivante de modes de réalisation, donnés à titre d'illustration et non de limitation, en référence aux dessins joints parmi lesquels :

la figure 1 illustre schématiquement un dispositif d'imagerie selon un exemple de réalisation ;
la figure 2 illustre schématiquement, plus en détail, une partie d'une matrice de pixels du dispositif d'imagerie de la figure 1 selon un exemple de réalisation ;
la figure 3 illustre schématiquement, plus en détail, un bloc de traitement d'une image du dispositif d'imagerie de la figure 1 selon un exemple de réalisation ;
la figure 4 est un organigramme illustrant des étapes d'un procédé de traitement d'image selon un exemple de réalisation ;
la figure 5 est un organigramme illustrant des étapes d'un procédé de traitement d'une image selon un autre exemple de réalisation ;
la figure 6 est un organigramme illustrant des étapes d'un procédé de suppression des résidus de colonnes selon un exemple de réalisation ; et
la figure 7 est un organigramme illustrant plus en détail des étapes de la figure 6 selon un exemple de réalisation.

## Description détaillée

Bien que certains des modes de réalisation de la description suivante soient décrits en relation avec une matrice de pixels du type microbolomètre, l'homme de l'art notera que les procédés décrits ici s'appliquent également à d'autres types de dispositifs d'imagerie infrarouge, incluant des dispositifs refroidis.

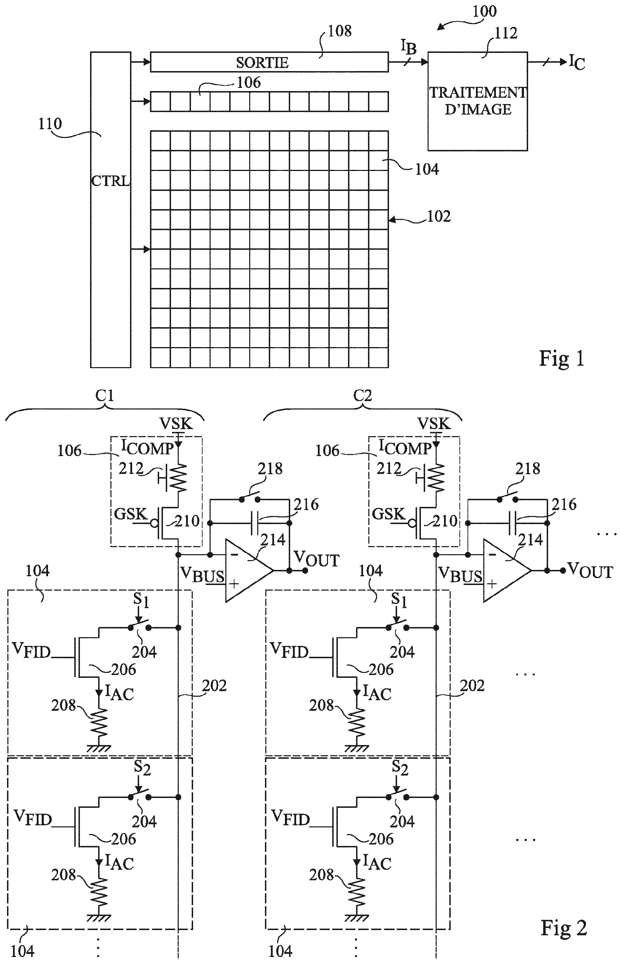

La figure 1 illustre un dispositif d'imagerie infrarouge 100 comprenant une matrice 102 de pixels sensibles à la lumière infrarouge. Par exemple, dans certains modes de réalisation, la matrice de pixels est sensible à de la lumière infrarouge de grande longueur d'onde, telle que la lumière ayant une longueur d'onde comprise entre 7 et 13 $\mu$m.

Pour simplifier l'illustration, une matrice 102 de seulement 144 pixels 104, disposés en 12 rangées et 12 colonnes, est illustrée en figure 1. Dans d'autres modes de réalisation la matrice de pixels 102 peut comprendre n'importe quel nombre de rangées et de colonnes de pixels. Typiquement, la matrice comprend par exemple 640 par 480, ou 1024 par 768 pixels.

Chaque colonne de pixels de la matrice 102 est associée à une structure de référence 106 correspondante. Bien que n'étant pas fonctionnellement un élément d'imagerie, cette structure sera appelée ici "pixel de référence" par analogie structurelle avec les pixels d'imagerie (ou actifs) 104. En outre, un bloc de sortie 108 est couplé à chaque colonne de la matrice de pixels 102 et à chaque pixel de référence 106, et fournit une image brute $I_B$.

Un circuit de commande 110 fournit par exemple des signaux de commande à la matrice de pixels, aux pixels de référence 106, et au bloc de sortie 108. L'image brute $I_B$ est, par exemple, fournie à un bloc de traitement d'image 112, qui applique des décalages et des gains aux pixels de l'image pour produire une image corrigée $I_C$.

La figure 2 illustre plus en détail deux colonnes C1 et C2 de la matrice de pixels 102 et leurs pixels de référence associés et des circuits de sortie selon un exemple dans lequel le dispositif d'imagerie est un microbolomètre.

Chaque colonne de pixels de la matrice de pixels 102 est couplée à une ligne de colonne 202 correspondante. Par exemple, chaque pixel 104 comprend un interrupteur 204, un transistor 206 et un bolomètre 208 couplés en série entre la ligne de colonne 202 correspondante et un noeud de masse.

Les bolomètres sont bien connus dans la technique, et comprennent, par exemple, une membrane suspendue au-dessus d'un substrat, comprenant une couche d'un matériau absorbant l'infrarouge et ayant la propriété que sa résistance est modifiée par une augmentation de température de la membrane due à la présence de rayonnement infrarouge.

Les interrupteurs 204 des pixels de chaque rangée sont commandés, par exemple, par un signal de sélection commun. Par exemple, en figure 2, une première rangée de pixels est commandée par un signal de commande S1, et une seconde rangée de pixels est commandée par un signal de commande S2.

Les transistors 206 sont, par exemple, des transistors NMOS recevant sur leurs grilles une tension de polarisation $V_{FID}$ pour contrôler la chute de potentiel dans les bolomètres actifs, en induisant une tension stable sur l'une de leurs bornes, l'autre borne étant à la masse.

Le pixel de référence 106 associé à chaque colonne comprend un transistor 210 et un bolomètre aveugle 212 couplés en série entre la ligne de colonne 202 correspondante et une tension d'écrémage VSK. La tension d'écrémage VSK fixe le plus grand potentiel du pont de bolomètres formé par les pixels actif et de référence en induisant une tension stable sur l'une des bornes du bolomètre de référence. Le transistor 210 est, par exemple, un transistor PMOS recevant sur sa grille une tension de polarisation GSK pour contrôler la chute de potentiel dans le bolomètre aveugle en induisant une tension stable sur l'autre borne du bolomètre aveugle.

Les bolomètres aveugles 212 ont, par exemple, une structure similaire à celle des bolomètres actifs 208 de la matrice de pixels, mais sont rendus insensibles au rayonnement provenant de la scène, par exemple par un écran formé d'une barrière réfléchissante et/ou par une absorption de chaleur structurelle, par exemple en assurant au substrat une haute conductivité thermique, le bolomètre étant formé, par exemple, en contact direct avec le substrat.

Chaque ligne de colonne 202 est de plus couplée à un circuit de sortie faisant partie du bloc de sortie 108 de la figure 1. Dans l'exemple de la figure 2, chaque circuit de sortie comprend un amplificateur à transimpédance capacitive (CTIA) 214 ayant sa borne d'entrée négative couplée à la ligne de colonne 202 correspondante, et sa borne d'entrée positive recevant une tension de référence $V_{BUS}$. La sortie de l'amplificateur 214 fournit une tension de sortie $V_{OUT}$ de la colonne. Un condensateur 216 et un interrupteur 218 sont couplés en parallèle entre la borne d'entrée négative et la borne de sortie de l'amplificateur 214.

Pendant une étape de lecture de la matrice de pixels 102, les rangées de pixels sont lues, par exemple une par une, en activant et en désactivant l'interrupteur 218 de chaque circuit de sortie du bloc de sortie 108 pour réinitialiser la tension sur le condensateur 216, et en activant le signal de sélection approprié S1, S2, etc. de la rangée à lire. La différence entre le courant $I_{COMP}$ dans le pixel de référence et le courant $I_{AC}$ dans le pixel actif est intégrée par le condensateur 216 pendant un temps d'intégration fini pour produire une tension de sortie $V_{OUT}$ représentant la valeur du pixel.

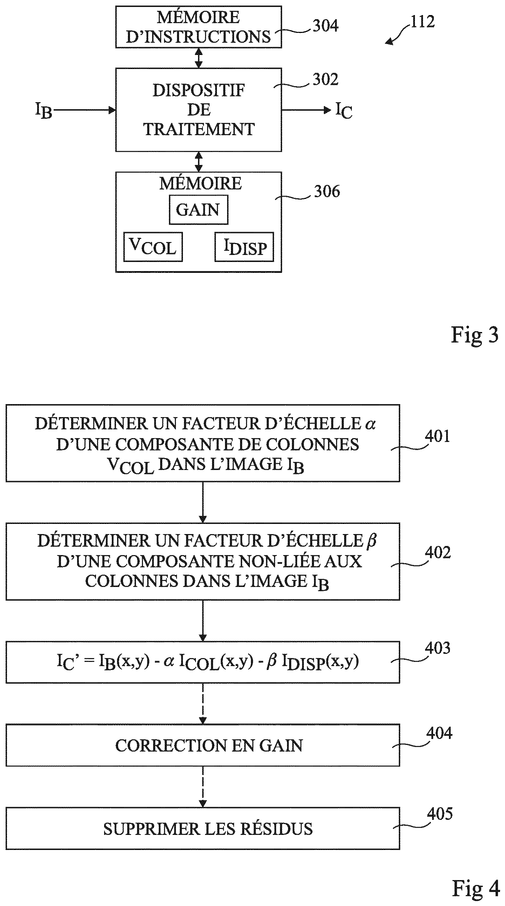

La figure 3 illustre plus en détail le bloc de traitement d'image 112 de la figure 1 selon un exemple de réalisation.

Les fonctions du bloc de traitement d'image 112 sont, par exemple, mises en oeuvre par un logiciel, et le bloc de traitement d'image 112 comprend un dispositif de traitement 302 comportant un ou plusieurs processeurs commandés par des instructions stockées dans une mémoire d'instructions 304. Dans d'autres modes de réalisation, les fonctions du bloc de traitement d'image 112 peuvent être mises en oeuvre au moins partiellement par du matériel dédié. Dans ce cas, le dispositif de traitement 302 comprend, par exemple, un ASIC (Application Specific Integrated Circuit - "circuit intégré spécifique à une application") ou un FPGA (Field Progammable Gate Array - "réseau de portes programmable sur site"), et la mémoire d'instructions 304 peut être omise.

Le dispositif de traitement 302 reçoit l'image d'entrée brute $I_B$, et génère l'image corrigée $I_C$, qui est par exemple fournie à un afficheur (non représenté) du dispositif d'imagerie. Le dispositif de traitement 302 est aussi couplé à une mémoire de données 306 stockant un vecteur $V_{COL}$ représentant une variation structurelle entre colonnes introduite par la matrice de pixels 102, et une matrice $I_{DISP}$ représentant une dispersion structurelle 2D non liée aux colonnes introduite par la matrice de pixels 102. La variation entre colonnes résulte principalement, par exemple, de l'utilisation de pixels de référence 106 dans chaque colonne, alors que la rangée de pixels de référence de colonnes n'est généralement pas parfaitement uniforme. La dispersion 2D non liée aux colonnes résulte principalement, par exemple, de différences physiques locales et/ou structurelles entre les bolomètres actifs de la matrice de pixels résultant, par exemple, des dispersions du procédé technologique. La mémoire de données 306 stocke aussi, par exemple, une matrice de gain, traitée plus en détail ci-après.

La figure 4 est un organigramme illustrant des étapes d'un procédé de traitement d'image selon un exemple de réalisation. Ce procédé est mise en oeuvre, par exemple, par le bloc de traitement d'image 112 décrit ci-après.

On suppose qu'une image brute $I_B$ a été captée par la matrice de pixels 102 de la figure 1, et que cette matrice de pixels est telle que chaque colonne de la matrice est associée à un pixel de référence correspondant.

En outre, on suppose que le vecteur de colonnes $V_{COL}$ et la matrice de dispersion 2D $I_{DISP}$ sont disponibles. Le vecteur de colonnes $V_{COL}$ et la matrice de dispersion 2D $I_{DISP}$ sont générés en se basant, par exemple, sur une seule image de référence $I_{REF}(x,y)$ captée durant une phase initiale de mise en route du dispositif d'imagerie. L'image de référence est, par exemple, celle qui a été captée en face d'un corps noir ou d'une scène d'émission uniforme et à une température contrôlée. Principalement dans le but d'annuler le bruit temporel, l'image de référence est obtenue, par exemple, en moyennant plusieurs images, par exemple environ 50 images. Cette image de référence $I_{REF}(x,y)$ est considérée, par exemple, comme ayant des composantes structurelles de colonnes et de dispersion 2D selon la relation suivante :

$$I_{REF}(x, y) = I_{COL}(x, y) \oplus I_{DISP}(x, y)$$

où $I_{COL}(x, y)$ est une matrice représentant les variations de référence entre les colonnes de la matrice de pixels, et $I_{DISP}(x,y)$ est la matrice représentant la dispersion 2D de référence pour chaque pixel de la matrice de pixels.

La matrice $I_{COL}$ peut être représentée par le vecteur $V_{COL}$, qui a une longueur égale au nombre n de colonnes dans l'image. Par exemple, la matrice $I_{COL}(x, y)$ a un nombre m de rangées égal au nombre de rangées de l'image, et chaque rangée comprend le vecteur $V_{COL}$. La génération du vecteur $V_{COL}$ implique, par exemple, le traitement de l'image de référence $I_{REF}$ pour extraire la composante de colonnes. Celle-ci est égale, par exemple, pour chaque colonne, à la moyenne des valeurs des pixels de la colonne. La génération de la matrice $I_{DISP}$ implique, par exemple, de soustraire, à chaque valeur de pixel de l'image de référence, la valeur de la variation entre colonnes $V_{COL}(x)$ correspondante.

A une première étape 401 de la figure 4, un facteur d'échelle $\alpha$ est déterminé, pour l'image brute $I_B$, représentant le niveau de la variation entre colonnes $V_{COL}$ dans l'image $I_B$. Dans un mode de réalisation, la valeur du facteur d'échelle $\alpha$ est déterminée en se basant sur une minimisation de la somme des composantes de colonnes $I_{COL}$ dans l'image $I_B$. Cela peut être exprimé par la fonction de minimisation suivante :

$$\alpha = arg\,min_{\alpha \in \mathbb{R}} \sum_{x,y} (I_B(x,y) - \alpha \times I_{COL}(x,y))^2$$

où $argmin_{\alpha \in \mathbb{R}} f(\alpha)$ est l'argument pour lequel la fonction donnée atteint sa valeur minimale. Comme indiqué ci-dessus, la matrice $I_{COL}(x,y)$ peut être représentée comme un vecteur $V_{COL}(x)$, qui définit une seule valeur pour chaque colonne. Pour faciliter la résolution de ce problème de minimisation, et aussi pour simplifier le calcul, l'image brute $I_B$ est aussi rangée, par exemple, mise sous la forme d'un vecteur en prenant une moyenne de chaque colonne. En outre, un filtrage passe-haut est appliqué, par exemple, horizontalement dans l'image, en d'autres termes dans la direction des rangées, et aussi au vecteur $V_{COL}(x)$. Le problème de minimisation est ensuite résolu, par exemple, en se basant sur la moyenne des colonnes de l'image transformée, comme suit :

$$\alpha = arg\,min_{\alpha \in \mathbb{R}} \sum_{x} \left[ \left( \frac{1}{m} \sum_{y} T(I_B(x,y)) \right) - \alpha \times T(V_{COL}(x)) \right]^2$$

où $T()$ représente un filtrage passe-haut appliqué au vecteur de colonnes $V_{COL}$ et à l'image d'entrée $I_B(x,y)$, et m est le nombre de rangées de l'image.

Par exemple, la fonction de filtrage est définie par $T(X)=X*hp$, en d'autres termes la convolution de la matrice X avec un filtre passe-haut horizontal $hp$. Dans un exemple, la fonction de filtrage $hp$ est définie par les coefficients [0,0456 -0,0288 -0,2956 0,5575 -0,2956 -0,0288 0,0456], appliqués à un pixel central à l'intérieur d'une fenêtre locale selon la dimension x. Plus généralement, le filtre est, par exemple, un filtre-passe haut adapté à rendre plus nets les bords verticaux de l'image, en d'autres termes à extraire le bruit de colonne.

Le problème de minimisation est résolu, par exemple, en se basant sur la solution directe suivante pour le facteur d'échelle $\alpha$ :

$$\alpha = \frac{\sum_x \left(\frac{1}{m}\sum_y T(I_B(x,y)) \times T(V_{COL}(x))\right)}{\sum_x T(V_{COL}(x)) \times T(V_{COL}(x))}$$

En d'autres termes, la détermination du facteur d'échelle $\alpha$ implique, par exemple, d'appliquer le filtre passe haut à l'image brute selon ses rangées et aussi au vecteur de colonnes de référence ; de déterminer les moyennes des colonnes de l'image filtrée, résultant en un vecteur de même taille que le vecteur de colonnes de référence ; et ensuite de déterminer le facteur d'échelle comme la minimisation de la différence entre les deux vecteurs de colonnes, c'est à dire entre les moyennes des colonnes de l'image filtrée et le vecteur de colonnes filtré.

Comme cela sera décrit plus en détail ci-après, le facteur d'échelle $\alpha$ permet de déterminer pour l'image des valeurs de décalage de colonnes $\alpha.I_{COL}(x,y)$.

En se référant de nouveau à la figure 4, à une étape 402 suivante, un facteur d'échelle $\beta$ est déterminé, pour l'image brute $I_B$, représentant le niveau de contribution de la composante de dispersion 2D de référence $I_{DISP}$ dans l'image.

Pour déterminer le facteur d'échelle $\beta$, on suppose que les images captées sont des images naturelles, ayant par exemple des statistiques de scène naturelle, et que de grandes variations locales entre pixels, c'est-à-dire les variations entre un pixel et ses voisins, sont le résultat d'une dispersion 2D fixe. Une valeur du facteur d'échelle $\beta$ est déterminée, par exemple, de façon qu'elle réduise l'impact de cette dispersion sur toute l'image. L'approche adoptée est, par exemple, de minimiser la variation totale (TV) dans l'image, en se basant sur l'équation suivante :

$$\beta = \arg\min_\beta TV(I_B(\beta)) = \arg\min_\beta \sum_{x,y} |\nabla(I_B - \beta \times I_{DISP})|$$

où $\nabla()$ est la valeur du gradient du pixel. Comme bonne approximation du problème de minimisation, cela est traité, par exemple, comme la minimisation de :

$$\beta = \arg\min_\beta \sum_{x,y} |\nabla(I_B - \beta \times I_{DISP})|^2$$

Un tel problème de minimisation est résolu par exemple en se basant sur la solution directe suivante pour le facteur d'échelle $\beta$ :

$$\beta = \frac{\sum(\nabla_x I_B \cdot \nabla_x I_{DISP} + \nabla_y I_B \cdot \nabla_y I_{DISP})}{\sum((\nabla_x I_{DISP})^2 + (\nabla_y I_{DISP})^2)}$$

où $\nabla_x$ est la valeur du gradient de pixel entre des pixels adjacents dans une direction horizontale de l'image, en d'autres termes le long de chaque rangée, et $\nabla_y$ est la valeur du gradient du pixel entre des pixels adjacents dans une direction verticale de l'image, en d'autres termes le long de chaque colonne.

L'étape 402 implique donc de déterminer, pour chaque pixel de l'image brute et pour chaque élément de la matrice de dispersion 2D de référence, une valeur de gradient basée sur au moins un pixel adjacent ; et de déterminer le facteur d'échelle $\beta$ en se basant sur une minimisation de la différence entre les gradients de l'image d'entrée brute et les gradients de la matrice de dispersion 2D de référence.

Dans cet exemple, le facteur d'échelle $\beta$ est déterminé en se basant sur l'image brute $I_B$. Cependant, dans d'autres modes de réalisation, le facteur d'échelle $\beta$ peut être déterminé en se basant sur une image après que les décalages de colonnes $\alpha.I_{COL}(x,y)$ ont été supprimés. La solution directe pour le facteur d'échelle $\beta$ devient donc :

$$\beta = \frac{\sum(\nabla_x I_{CC} \cdot \nabla_x I_{DISP} + \nabla_y I_{CC} \cdot \nabla_y I_{DISP})}{\sum((\nabla_x I_{DISP})^2 + (\nabla_y I_{DISP})^2)}$$

où $I_{CC}$ est l'image dans laquelle chaque pixel (x,y) a été corrigé, par exemple, en se basant sur l'équation :

$$I_{CC}(x,y) = I_B(x,y) - \alpha \times I_{COL}(x,y)$$

où $I_{COL}$ (x,y) est la matrice comprenant, dans chacune de ses rangées, le vecteur de colonnes $V_{COL}(x)$.

Dans certains modes de réalisation, dans le calcul de l'opération 402, seules les valeurs de gradient de pixel qui sont en dessous d'un seuil haut sont prises en compte. En effet, on suppose, par exemple, que les très forts gradients correspondent aux bords associés à la scène dans l'image. Par exemple, ce seuil haut est choisi pour être environ trois fois la plus grande valeur de gradient calculée pour la matrice de dispersion de référence $I_{DISP}$.

A une étape 403 suivante, une image corrigée $I_C'$ est générée en se basant sur les valeurs de décalage de colonnes égales à $\alpha.I_{COL}(x,y)$, et sur les valeurs de décalage de pixels égales à $\beta$-$I_{DISP}(x,y)$. Par exemple, l'image corrigée est calculée par :

$$I_C' = I_B(x,y) - \alpha I_{COL}(x,y) - \beta I_{DISP}(x,y)$$

Dans le mode de réalisation décrit ci-dessus, l'image corrigée est basée sur les composantes $I_{COL}$ et $I_{DISP}$ prises à partir d'une seule image de référence $I_{REF}$. Dans d'autres modes de réalisation, dans le but d'augmenter la précision de la correction de référence, au lieu d'une seule image de référence, deux images de référence ont par exemple été captées à différentes températures de détection T0 et T1 respectivement, et le dispositif stocke par exemple dans la mémoire 306 de la figure 3 un premier ensemble de composantes $I_{COL}^{T0}$ et $I_{DISP}^{T0}$ basées sur l'image de référence prise à T0, et un second ensemble de composantes $I_{COL}^{T1}$ et $I_{DISP}^{T1}$ basées sur l'image de référence prise à T1. Dans un tel cas, les valeurs des scalaires $\alpha$ et $\beta$ sont déterminées, par exemple, en utilisant ces composantes en soustrayant directement la première composante de l'image d'entrée $I_B(x,y)$ et, par exemple, en calculant $\beta$ et de la même manière que cela a été décrit en relation avec les étapes 401 et 402, mais en se basant sur une composante structurelle de colonnes $I'_{COL} = (I_{COL}^{T1} - I_{COL}^{T0})$ et une composante de dispersion 2D $I'_{DISP} = (I_{DISP}^{T1} - I_{DISP}^{T0})$. L'image corrigée $I_C'$ est ensuite déterminée, par exemple, par :

$$I_C' = I_B(x,y) - I_{COL}^{T0}(x,y) - I_{DISP}^{T0}(x,y) - \alpha\left(I'_{COL}(x,y)\right) - \beta\left(I'_{DISP}(x,y)\right)$$

Dans certains modes de réalisation, les étapes 401 à 403 peuvent assurer une correction suffisante du décalage, dans ce cas l'image corrigée $I_C'$ fournie l'image $I_C$ à la sortie du bloc de traitement d'image 112 de la figure 1. Dans d'autres modes de réalisation, une étape 404 supplémentaire et/ou une étape 405 supplémentaire sont par exemple réalisées ensuite pour générer l'image finale $I_C$.

A l'étape 404, une correction de gain est par exemple appliquée à l'image en calculant un facteur de correction d'image $\gamma$ à partir de l'image corrigée $I_C'$ avant de le soustraire de cette image et de multiplier chaque valeur de pixel du résultat par la matrice de gain. Par exemple, cette valeur de correction de gain $\gamma$ est obtenue en résolvant le problème de minimisation suivante :

$$\gamma = \arg\min_{\gamma}\left(var(Gain \times I_C' - \gamma \times Gain)\right)$$

La solution directe pour le facteur de correction d'image $\gamma$ devient donc :

$$\gamma = \frac{\overline{Gain^2 \times I'_C} - \overline{Gain \times I'_C} \times \overline{Gain}}{var(Gain)}$$

où $\overline{X}$ est la moyenne de la matrice X, et *Gain* est la matrice de gain, qui est stockée par exemple dans la mémoire 306 avec le vecteur $V_{COL}$ et la matrice $I_{DISP}$. Une telle matrice de gain est déterminée par exemple, comme cela est connu de l'homme de l'art, à partir de la différence entre deux images de référence captées devant une source uniforme, telle qu'un corps noir, à deux températures différentes.

Une image corrigée $I_C''$ est ensuite générée en se basant sur la multiplication de l'image corrigée par le gain. Par exemple, l'image corrigée par I"$_C$ est calculée par :

$$I_C'' = (I_C' - \gamma) \times Gain$$

A l'étape 405, les résidus de décalage, tels que les résidus de colonnes et/ou les résidus de dispersion, restant dans l'image, sont par exemple supprimés.

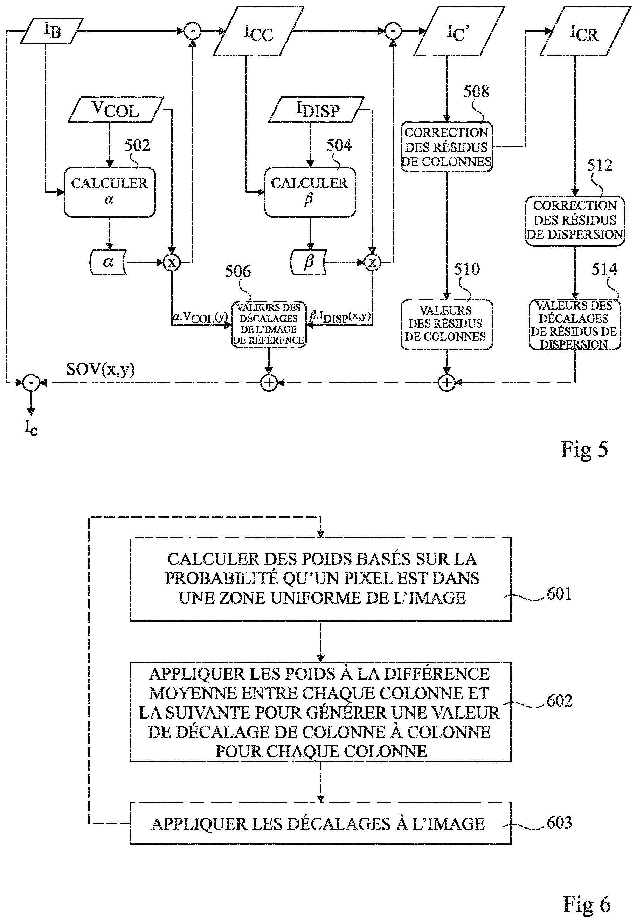

La figure 5 est un organigramme illustrant des étapes d'un procédé de correction de décalage dans une image selon un exemple de réalisation supplémentaire.

Comme cela est représenté par un bloc de traitement (CALCULER $\alpha$) 502, l'image d'entrée $I_B$ et le vecteur de colonnes $V_{COL}$ sont utilisés, par exemple, pour générer le facteur d'échelle $\alpha$. Le vecteur $V_{COL}$ est ensuite multiplié par le facteur d'échelle $\alpha$ pour générer les valeurs de décalage de colonnes $\alpha.V_{COL}(y)$. Ces valeurs de décalage sont ensuite soustraites de l'image brute $I_B$ pour fournir l'image $I_{CC}$ corrigée des variations entre colonnes.

Comme cela est représenté par un bloc de traitement (CALCULER $\beta$) 504, l'image $I_{CC}$ corrigée des variations entre colonnes et la matrice de dispersion $I_{DISP}$ sont par exemple utilisées pour générer le facteur d'échelle $\beta$. La matrice $I_{DISP}$ est ensuite multipliée par le facteur d'échelle $\beta$ pour générer les valeurs de décalage de pixels $\beta.I_{DISP}(x,y)$. Ces valeurs de décalage sont ensuite soustraites de l'image $I_{CC}$ pour générer l'image corrigée $I_C'$.

En outre, les valeurs de décalage $\alpha.V_{COL}(y)$ et $\beta.I_{DISP}(x,y)$ sont par exemple ajoutées l'une à l'autre pour fournir les valeurs de décalage de l'image de référence (VALEURS DES DECALAGES DE L'IMAGE DE REFERENCE) 506.

Bien que cela ne soit pas illustré en figure 5, la correction de gain telle que décrite ci-dessus en relation avec l'étape 404 de la figure 4 est ensuite appliquée de manière optionnelle à l'image corrigée $I_C'$, et le facteur de correction d'image $\gamma$ est appliqué à l'image.

Comme cela est représenté par un bloc de traitement 508, une correction des résidus de colonnes est ensuite réalisée, par exemple en se basant sur l'image corrigée $I_C'$, dans le but de générer les valeurs de correction des résidus de colonnes (VALEURS DES RESIDUS DE COLONNES) 510, et une image $I_{CR}$ corrigée des résidus de colonnes. En effet, certains décalages associés au circuit de colonne de chaque colonne peuvent encore être présents dans l'image, entrainant éventuellement des bandes verticales visibles dans l'image. La correction des résidus de colonnes est effectuée, par exemple, pour retirer ces artefacts de colonnes.

Comme cela est représenté par un bloc de traitement 512, une correction des résidus de dispersion 2D est ensuite effectuée par exemple en se basant sur l'image $I_{CR}$ corrigée à des résidus de colonnes pour générer les valeurs de décalage des résidus de dispersion 2D (VALEURS DES DECALAGES DE RESIDUS DE DISPERSION) 514. La correction des résidus de dispersion est effectuée, par exemple, en utilisant un filtre lisseur préservant les bords et réduisant le bruit, tel qu'un filtre diffuseur anisotrope.

Dans l'exemple de la figure 5, les valeurs de décalage 506, 510 et 514 sont additionnées pour fournir des valeurs de décalage sommées SOV(x,y) à appliquer à l'image. Ces valeurs de décalage SOV(x,y) sont ensuite soustraites de l'image brute $I_B$. Cependant, un avantage à déterminer les valeurs de décalage sommées SOV(x,y) est que ces décalages peuvent être appliqués à une image différente de celle utilisée pour les générer. Par exemple, dans le cas où l'image brute $I_B$ est une image d'une séquence vidéo captée par le dispositif d'imagerie, les valeurs de décalage SOV(x,y) sont soustraites par exemple d'une image suivante de la séquence. Cela entraîne une réduction du retard entre la capture de l'image brute et l'obtention de l'image corrigée.

Dans des variantes de réalisation, les décalages 506 de l'image de référence sont appliqués à l'image brute courante ou suivante, la correction de gain est effectuée sur l'image résultante $I_C'$, et les valeurs des résidus de décalage de colonnes et de dispersion sont par exemple appliquées ensuite à l'image corrigée en gain.

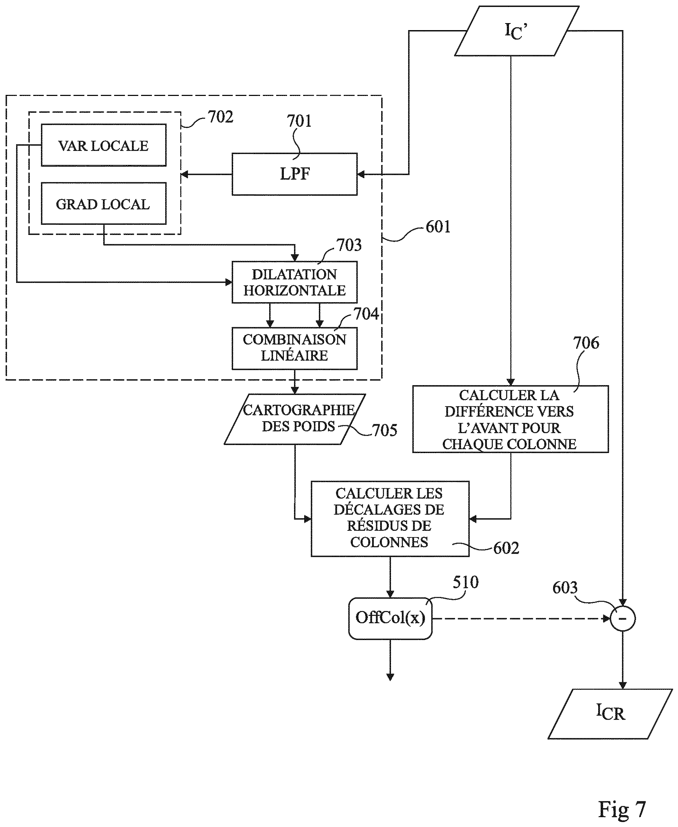

La correction des résidus de colonnes effectuée à l'étape 508 de la figure 5 va maintenant être décrite plus en détail en faisant référence aux organigrammes des figures 6 et 7.

La figure 6 est un organigramme illustrant des étapes d'un procédé de calcul des décalages de résidus de colonnes à appliquer à une image, par exemple à l'image corrigée $I_C$ résultant du procédé décrit ci-dessus. Ces étapes sont mises en oeuvre, par exemple, par le bloc de traitement d'image 112 de la figure 3 décrite précédemment.

A une première étape 601, des poids $W_{x,y}$ sont calculés pour chaque pixel de chaque colonne de l'image, en se basant sur une estimation de l'uniformité dans une zone locale de l'image définie par le voisinage du pixel. Plus l'uniformité est élevée, plus le poids associé au pixel est élevé, puisque le plus probable est que cette différence entre colonnes résulte de résidus de colonnes structurels (fixes). Par exemple, le calcul est basé, pour chaque pixel, sur un voisinage de 9 par 3 pixels incluant le pixel en question, en d'autres termes sur une zone rectangulaire définie jusqu'à quatre pixels à gauche et à droite du pixel en question et jusqu'à un pixel en dessus et en dessous du pixel en question. L'uniformité est estimée, par exemple, en calculant un gradient local et une variance locale horizontale pour le voisinage de chaque pixel. Dans certains modes de réalisation, les poids sont calculés en se basant sur l'image après que les colonnes ont été filtrées verticalement par un filtre passe bas, comme cela sera décrit plus en détail ci-dessous.

A une étape 602, la différence moyenne entre chaque colonne et la suivante est pondérée par un poids correspondant, donnant pour chaque colonne une valeur de décalage de colonne à colonne $\nabla Col_w(x)$ correspondante. Par exemple, le vecteur de décalage de colonne à colonne $\nabla Col_w(x)$ est déterminé en se basant sur l'équation suivante :

$$\nabla Col_w(x) = \frac{1}{m} \sum_{y=1}^{m} w_{x,y} \left( I_{x+1,y} - I_{x,y} \right)$$

où $w_{x,y}$ sont les poids calculés à l'étape 601 ci-dessus, $I_{x+1,y}$ est la valeur du pixel en position y dans la colonne suivante x+1, et $I_{x,y}$ est la valeur du pixel en position y dans la colonne courante x. En d'autres termes, chaque valeur de décalage de colonne à colonne $\nabla Col_w(x)$ est déterminée comme une moyenne des différences pondérées entre les valeurs de pixel de la colonne x et de la colonne x+1. La dernière valeur du décalage de colonnes de la rangée est par exemple fixée à 0.

Comme étape supplémentaire, comme le décalage de colonne à colonne représente seulement le décalage vers l'avant entre une colonne et la suivante, chaque terme du vecteur de décalage est intégré par exemple vers l'arrière, c'est-à-dire en commençant par l'avant-dernier terme, chaque valeur de décalage de colonnes étant additionnée de manière cumulative à la valeur précédente jusqu'à atteindre le premier terme, pour fournir un terme de décalage de colonnes final OffCol(x) comme suit :

$$OffCol(n) = 0, and\ OffCol(x-1) = OffCol(x) + \nabla Col_w(x-1)$$

Ces valeurs de décalage fournissent par exemple les valeurs de décalage de résidus de colonnes 510 de la figure 5, qui sont par exemple additionnées avec les autres décalages pour fournir les valeurs de décalages sommés SOV(x,y) devant être soustraites de l'image brute $I_B$ ou d'une image brute suivante. A titre de variante, à une étape suivante 603, les valeurs de décalage sont appliquées à l'image $I_C$' déjà corrigée en se basant sur les composantes de variation entre colonnes $V_{COL}$ et de dispersion 2D $I_{DISP}$, dans le but de générer une image propre $I_{CR}$. En outre, comme cela est représenté par une flèche en pointillés en figure 6, dans certains modes de réalisation les étapes 601 et 602 sont répétées au moins une fois en se basant sur l'image propre générée dans le but de retirer encore plus de résidus de colonnes structurels.

La figure 7 est un organigramme illustrant plus en détail les étapes de la figure 6 selon un exemple de réalisation.

Comme cela est représenté, l'étape 601 de la figure 6 de calcul des poids basée sur l'uniformité de la zone dans laquelle le pixel est présent implique par exemple les sous étapes 701 à 704.

L'étape 701 implique d'appliquer un filtre passe-bas verticalement le long des colonnes de l'image. Appliquer un tel filtre passe-bas réduit par exemple l'impact du bruit de configuration fixe (FPN - "fixed pattern noise") relatif aux capteurs d'image. Cette étape de filtrage est optionnelle. Le filtre est par exemple un filtre gaussien défini par une taille de noyau wG et par sa déviation standard σ. Dans un exemple, le filtre a une taille de noyau wG de 9 et une déviation standard de 2.

L'étape 702 implique de calculer une valeur de gradian local $\tilde{P}^{\nabla}$ et une valeur de variance horizontale locale $\tilde{P}^{VAR}$ pour chaque pixel de l'image.

Le gradient local $\tilde{P}^{\nabla}$ est par exemple déterminé en se basant sur l'équation suivante :

$$\tilde{P}^{\nabla} = \frac{1}{G_x I^2 + G_y I^2}$$

où $G_x$ et $G_y$ sont les opérateurs de Sobel en x et en y respectivement, et I est l'image, par exemple après avoir été filtrée à l'étape 701.

La variance locale horizontale $\tilde{P}^{VAR}$ est par exemple déterminée en se basant sur l'équation suivante :

$$\tilde{P}^{VAR} = \frac{1}{\sum_{f \in \vartheta} (\bar{I} - I(f))^2}$$

où $\vartheta$ est le voisinage horizontal du pixel considéré, $\bar{I}$ est la moyenne des valeurs des pixels dans le voisinage horizontal et I(f) est la valeur de pixel correspondante dans le voisinage horizontal. Le voisinage horizontal $\vartheta$ a par exemple une taille 2*wV+1 d'au moins trois pixels et par exemple de plus de neuf pixels, et peut être généralement défini comme suit :

$$\vartheta = \left[ I_{x-wV,y}, I_{x-wV+1,y}, ..., I_{x,y}, ..., I_{x+wV-1,y}, I_{x+wV,y} \right]$$

A l'étape 703, une dilatation morphologique horizontale est effectuée par exemple sur chacune des valeurs de variance horizontale locale et de gradient local, en se basant par exemple sur les équations suivantes :

$$\tilde{P}^{DIL\_\nabla} = (\tilde{P}^{\nabla} \oplus \vartheta')$$

$$\tilde{P}^{DIL\_VAR} = (\tilde{P}^{VAR} \oplus \vartheta')$$

où $(\tilde{P} \oplus \vartheta')$ pour un pixel donné x est égal par exemple à $max\{\tilde{P}(x), x \in \vartheta'\}$, et $\vartheta'$ est un voisinage horizontal de pixels du pixel x. Le voisinage $\vartheta'$ a par exemple une taille 2*wD+1 d'au moins 3 pixels, et peut être généralement défini par :

$$\vartheta' = \left[ P_{x-wD,y}, P_{x-wD+1,y}, ..., P_{x,y}, ..., P_{x+wD-1,y}, P_{x+wD,y} \right]$$

La dilatation morphologique horizontale à pour effet de réduire l'influence du flou sur le calcul des poids (généralement causé par les aberrations optiques) en présence de structures verticales fortement contrastées dans la scène, en étendant aux pixels voisins horizontalement l'influence de zones avec de fortes valeurs de gradient horizontal et/ou de fortes valeurs de variance.

A l'étape 704, les valeurs $\tilde{P}^{DIL\_\nabla}$ et $\tilde{P}^{DIL\_VAR}$ sont normalisées par exemple pour chaque colonne de sorte que, pour une colonne, leur somme est égale à 1. Par exemple, ces normalisations sont calculées en se basant sur les équations suivantes

$$P_{x,y}^{\nabla} = \frac{\tilde{P}_{x,y}^{DIL\_\nabla}}{\sum_{x} \tilde{P}_{x,y}^{DIL\_\nabla}}$$

$$P_{x,y}^{VAR} = \frac{\tilde{P}_{x,y}^{DIL\_VAR}}{\sum_{x} \tilde{P}_{x,y}^{DIL\_VAR}}$$

Les poids $w_{x,y}$ sont ensuite déterminés par exemple par une combinaison linéaire de ces valeurs normalisées $P_{x,y}^{\nabla}$ et $P_{x,y}^{VAR}$, en donnant une estimation de l'uniformité dans une zone locale de l'image définie par le voisinage du pixel. Dans certains modes de réalisation, les valeurs de gradient et de variance peuvent être d'influences égales, dans ce cas les poids $w_{x,y}$ sont déterminés par exemple par l'équation suivante :

$$w_{x,y} = (P_{x,y}^{\nabla} + P_{x,y}^{VAR})/2$$

A titre de variante, une influence différente peut être affectée aux valeurs de variance et de gradient, en appliquant un scalaire à chaque valeur. Par exemple, les poids sont déterminés par l'équation suivante :

$$w_{x,y} = a \times P_{x,y}^{\nabla} + b \times P_{x,y}^{VAR}$$

où a et b sont les scalaires, et par exemple a+b=1. Par exemple, en choisissant b plus grand que a, tel qu'au moins cinq fois plus grand, une influence de la variance horizontale peut être appliquée.

En se référant de nouveau à la figure 7, les poids $w_{x,y}$ forment une cartographie de poids 705. Dans certains modes de réalisation, un poids est calculé pour chaque pixel de l'image, tandis que dans d'autres modes de réalisation les étapes 701 à 704 peuvent être adaptées pour fournir des poids pour seulement certains pixels, par exemple pour les pixels de chaque seconde, troisième ou quatrième colonne de l'image dans le but de réduire le temps de calcul.

L'étape suivante est l'étape 602 de la figure 6, dans laquelle les décalages de colonne à colonne $\nabla Col_w(x)$ sont déterminés par exemple en se basant sur l'équation ci-dessous :

$$\nabla Col_w(x) = \frac{1}{m} \sum_{y=1}^{m} w_{x,y} \left( I_{x+1,y} - I_{x,y} \right)$$

Les termes $(I_{x+1,y} - I_{x,y})$ sont les différences vers l'avant entre la colonne x et la colonne x+1, et celles-ci sont calculées par exemple à l'étape 706 de la figure 7, en se basant sur l'image $I_C'$. Dans certains modes de réalisation, seules les différences vers l'avant qui sont sous un certain seuil sont considérées dans le calcul de la moyenne pour une colonne donnée. En effet, les valeurs au-dessus d'un certain seuil peuvent être considérées comme représentant un bord vertical dans l'image de la scène qui ne doit pas être retirée. Le seuil est choisi par exemple pour être légèrement supérieur à la différence de colonne attendue maximum entre une colonne et la suivante. Les valeurs de décalage OffCol(x) sont ensuite calculées par exemple en intégrant les valeurs $\nabla Col_w(x)$, comme expliqué ci-dessus.

Comme cela a été mentionné ci-dessus, les valeurs de décalage OffCol(x) peuvent être soustraites par exemple de l'image $I_C'$ à une étape 603 pour générer une image propre $I_{CR}$ dans laquelle les artefacts de colonne ont été supprimés de l'image, ou peuvent être additionnées aux autres décalages comme représenté dans la figure 5.

Un avantage des procédés de correction de décalage décrits ici est qu'ils ne nécessitent pas l'utilisation d'un obturateur mécanique, et qu'ils se sont révélés être très efficaces.

En particulier, les inventeurs ont trouvé que, dans des matrices de pixels du type décrit dans la présente description, des variations entre des pixels et entre des pixels de référence dues à la température suivent la loi d'Arrhenius, selon laquelle l'énergie d'activation est essentiellement la même pour tous les pixels, et essentiellement la même pour tous les pixels de référence, ce qui implique que la dispersion entre pixels peut être considérée comme complètement, ou au moins essentiellement, contenue dans les préfacteurs constants de la loi d'Arrhenius décrivant chaque pixel. Par cela, en décomposant les décalages introduits par la matrice de pixels en des composantes 1D et 2D et en dérivant des facteurs d'échelle $\alpha$ et $\beta$ pour représenter ces composantes, une correction de décalage efficace peut être obtenue sans utiliser d'obturateur mécanique.

Ayant ainsi décrit au moins un mode de réalisation illustratif, de nombreux changements, modifications et améliorations apparaitront facilement à l'homme de l'art.

Par exemple, bien qu'un exemple spécifique d'un microbolomètre soit décrit en relation avec la figure 2, il apparaitra à l'homme de l'art que les procédés décrits ici peuvent être appliqués à de nombreuses autres mises en oeuvre d'un bolomètre, ou à d'autres types de dispositifs d'imageries $I_R$.

En outre, l'homme de l'art notera que les différentes étapes décrites en relation avec les différents modes de réalisation peuvent être effectuées, dans d'autres modes de réalisation, dans des ordres différents sans impacter leurs efficacités. Par exemple, l'ordre dans lequel les facteurs d'échelle $\alpha$ et $\beta$ sont déterminés peut être changé.

**Revendications**

1. Procédé de traitement d'image comprenant :

recevoir, par un dispositif de traitement (302), une image d'entrée ($I_B$) captée par une matrice de pixels (102) sensibles à l'infrarouge, la matrice de pixels comportant plusieurs colonnes de pixels (C1, C2), chaque colonne de pixels étant associée à un pixel de référence correspondant (106) ;

déterminer, en se basant sur l'image d'entrée et sur un vecteur de composante de colonnes ($V_{COL}$) représentant une variation entre colonnes introduite par les pixels de référence, un premier facteur d'échelle ($\sigma$) en estimant le niveau de ladite variation entre colonnes présente dans l'image d'entrée ;

générer des valeurs de décalage de colonnes ($\sigma.V_{COL}(y)$) en se basant sur le produit du premier facteur d'échelle par les valeurs dudit vecteur ;

déterminer, en se basant sur l'image d'entrée et sur une matrice de dispersion 2D ($I_{DISP}$) représentant une dispersion 2D introduite par la matrice de pixels, un second facteur d'échelle ($\beta$) en estimant le niveau de ladite dispersion 2D présente dans l'image d'entrée ;

générer des valeurs de décalage de pixels ($\beta.I_{DISP}(x,y)$) en se basant sur le produit du second facteur d'échelle par les valeurs de ladite matrice ; et
générer une image corrigée (I$_{C'}$) en appliquant lesdites valeurs de décalage de pixels et de colonnes.

2. Procédé selon la revendication 1, comprenant en outre la génération d'une image partiellement corrigée (I$_{CC}$) en se basant sur lesdites valeurs de décalage de colonnes, dans lequel ledit second facteur d'échelle est généré en se basant sur ladite image partiellement corrigée.

3. Procédé selon la revendication 1 ou 2, dans lequel ledit vecteur de colonnes (V$_{COL}$) et ladite matrice de dispersion (I$_{DISP}$) sont déterminés en se basant sur une image de référence (I$_{REF}$) représentant des décalages introduits par la matrice de pixels et les pixels de référence associés.

4. Procédé selon l'une quelconque des revendications 1 à 3, dans lequel ladite image corrigée (I$_{C'}$) est générée en se basant sur l'équation :

$$I_C' = I_B(x, y) - \alpha I_{COL}(x, y) - \beta I_{DISP}(x, y)$$

où Ig(x,y) est l'image d'entrée, $\alpha$ est le premier facteur d'échelle, I$_{COL}$(x,y) est une matrice comprenant dans chacune de ses lignes le vecteur de colonnes, $\beta$ est le second facteur d'échelle, et I$_{DISP}$(x,y) est la matrice de dispersion.

5. Procédé selon la revendication 1 ou 2, dans lequel :

le vecteur de colonnes (V$_{COL}$) représente la différence entre un premier vecteur de colonnes $(I_{COL}^{T0})$ basé sur une première image de référence prise à une première température ambiante (T0) et un second vecteur de colonnes $(I_{COL}^{T1})$ basé sur une seconde image de référence prise à une seconde température ambiante (T1) ;

la matrice de dispersion (I$_{DISP}$) représente la différence entre une première matrice de dispersion $(I_{DISP}^{T0})$ basée sur ladite première image de référence et une seconde matrice de dispersion $(I_{DISP}^{T1})$ basée sur ladite seconde image de référence.

6. Procédé selon la revendication 5, dans lequel ladite image corrigée (I$_{C'}$) est générée en se basant sur l'équation :

$$I_C' = I_B(x, y) - I_{COL}^{T0}(x, y) - I_{DISP}^{T0}(x, y) - \alpha\left(I_{COL}'(x, y)\right) - \beta\left(I_{DISP}'(x, y)\right)$$

où I$_B$(x,y) est l'image d'entrée, $\alpha$ est le premier facteur d'échelle, $I_{COL}^{T0}(x, y)$ est une matrice comprenant dans chacune de ses lignes le premier vecteur de colonnes, I'$_{COL}$(x,y) est une matrice égale à $\mathrm{I'}_{COL} = (I_{COL}^{T1} - I_{COL}^{T0})$ où $I_{COL}^{T1}$ est une matrice comprenant dans chacune de ses lignes le second vecteur de colonnes, $\beta$ est le second facteur d'échelle, $I_{DISP}^{T0}(x, y)$ est la première matrice de dispersion et I'$_{DISP}$(x,y) est une matrice égale à $\mathrm{I'}_{DISP} = (I_{DISP}^{T1} - I_{DISP}^{T0})$ où $I_{DISP}^{T1}$ est la seconde matrice de dispersion.

7. Procédé selon l'une quelconque des revendications 1 à 6, comprenant en outre la détermination d'au moins une valeur de décalage de résidus de colonnes (510) en se basant sur ladite image corrigée (I$_{C'}$).

8. Procédé selon la revendication 7, dans lequel la détermination de ladite au moins une valeur de décalage de résidus de colonnes comprend :

déterminer des poids (w$_{x,y}$) associés à au moins certains des pixels de ladite image corrigée, les poids étant générés en se basant sur une estimation de l'uniformité du voisinage de chacun desdits au moins certains pixels ;
calculer, pour chacun desdits au moins certains pixels, la différence par rapport à une valeur de pixel dans la ligne correspondante d'une colonne adjacente ; et

appliquer les poids auxdites différences et intégrer les différences pondérées pour générer ladite au moins une valeur de décalage de résidus de colonnes.

9. Procédé selon la revendication 8, dans lequel l'estimation de l'uniformité du voisinage de chacun desdits au moins certains pixels est basée sur une valeur de gradient $(P_{x,y}^{\nabla})$ et sur une valeur de variance horizontale $(P_{x,y}^{VAR})$ calculées pour chaque voisinage.

10. Procédé selon l'une quelconque des revendications 1 à 9, dans lequel la détermination du premier facteur d'échelle comprend :

appliquer un filtre passe-haut le long des lignes de l'image ;
appliquer ledit filtre passe-haut au vecteur de colonnes ; et
déterminer des moyennes de colonnes de l'image filtrée, le premier facteur d'échelle étant déterminé en se basant sur une minimisation des différences entre les moyennes de colonnes de l'image filtrée et les valeurs filtrées du vecteur de colonnes.

11. Procédé selon l'une quelconque des revendications 1 à 10, dans lequel le premier facteur d'échelle $\alpha$ est déterminé en se basant sur l'équation suivante :

$$\alpha = \frac{\sum_x \left(\frac{1}{m}\sum_y T\big(I_B(x,y)\big) \times T\big(V_{COL}(x)\big)\right)}{\sum_x T(V_{COL}(x)) \times T(V_{COL}(x))}$$

où T() représente un filtrage passe-haut appliqué au vecteur de colonnes $V_{COL}$ et aux lignes de l'image d'entrée $I_B(x,y)$.

12. Procédé selon l'une quelconque des revendications 1 à 11, dans lequel la détermination du second facteur d'échelle comprend :

déterminer, pour chaque pixel de l'image d'entrée et pour chaque élément de la matrice de dispersion, une valeur de gradient en se basant sur au moins un pixel adjacent, dans lequel le second facteur d'échelle est déterminé en se basant sur une minimisation de la différence entre les gradients de l'image d'entrée et les gradients de la matrice de dispersion.

13. Procédé selon l'une quelconque des revendications 1 à 12, dans lequel le second facteur d'échelle est déterminé en se basant sur l'équation suivante :

$$\beta = \frac{\sum(\nabla_x I_B \cdot \nabla_x I_{DISP} + \nabla_y I_B \cdot \nabla_y I_{DISP})}{\sum((\nabla_x I_{DISP})^2 + (\nabla_y I_{DISP})^2)}$$

où $I_B$ est l'image d'entrée, $I_{DISP}$ est la matrice de dispersion, $\nabla_x$ est la valeur du gradient de pixel entre des pixels adjacents dans la direction des lignes dans l'image d'entrée, et $\nabla_y$ est la valeur de gradient de pixel dans la direction des colonnes dans l'image d'entrée.

14. Procédé selon l'une quelconque des revendications 1 à 13, dans lequel lesdites valeurs de décalage de colonnes et de pixels sont appliquées à une image d'entrée supplémentaire.

15. Procédé selon l'une quelconque des revendications 1 à 14, comprenant en outre la détermination d'une valeur de correction de gain ($\gamma$) obtenue en résolvant le problème de minimisation suivante :

$$\gamma = \arg\min_{\gamma}\left(var(Gain \times I_C{}' - \gamma \times Gain)\right)$$

où var est la variance, $I_C$' est l'image corrigée, et Gain est une matrice de gain.

16. Dispositif de traitement d'image comprenant :

une mémoire (306) stockant un vecteur de colonnes ($V_{COL}$) et une matrice de dispersion ($I_{DISP}$) ;
un dispositif de traitement (302) adapté pour :

recevoir une image d'entrée ($I_B$) captée par une matrice de pixels (102) sensibles à l'infrarouge, la matrice de pixels comportant plusieurs colonnes de pixels (C1, C2), chaque colonne de pixels étant associée à un pixel de référence correspondant (106) ;
déterminer, en se basant sur l'image d'entrée et sur le vecteur de colonnes représentant une variation entre colonnes introduite par les pixels de référence, un premier facteur d'échelle ($\alpha$) en estimant un niveau de ladite variation entre colonnes présente dans l'image d'entrée ;
générer des valeurs de décalage de colonnes ($\alpha.V_{COL}(x)$) en se basant sur le produit du premier facteur d'échelle par les valeurs dudit vecteur ;
déterminer, en se basant sur l'image d'entrée et sur la matrice de dispersion représentant une dispersion 2D introduite par la matrice de pixels, un second facteur d'échelle (($\beta$) en estimant le niveau de ladite dispersion 2D présente dans l'image d'entrée ;
générer des valeurs de décalage de pixels ($\beta.I_{DISP}(x, y)$) en se basant sur le produit du second facteur d'échelle par les valeurs de ladite matrice ; et
générer une image corrigée ($I_C$') en appliquant lesdites valeurs de décalage de colonnes et de pixels.

**Patentansprüche**

1. Ein Verfahren zur Bildverarbeitung, das Folgendes aufweist:

Empfangen, durch eine Verarbeitungseinrichtung (302), eines Eingabebildes ($I_B$), das durch eine Pixelanordnung (102) erfasst wurde, die bezüglich Infrarotstrahlung empfindlich ist, wobei die Pixelanordnung eine Vielzahl von Pixelspalten (C1, C2) hat, wobei jede Pixelspalte mit einem entsprechenden Referenzpixel (106) assoziiert ist;
Bestimmen, basierend auf dem Eingabebild und auf einem Spaltenkomponentenvektor ($V_{COL}$), der eine Spaltenspreizung darstellt, die durch die Referenzpixel (106) eingeführt wird, eines ersten Skalierungsfaktors ($\alpha$) durch Schätzen eines Levels bzw. Ausmaßes der Spaltenspreizung, die in dem Eingabebild vorliegt;
Generieren von Spaltenversatzwerten ($\alpha V_{COL}(x)$) basierend auf dem Produkt des ersten Skalierungsfaktors mit den Werten des Vektors;
Bestimmen, basierend auf dem Eingabebild und auf einer 2D-Dispersionsmatrix ($I_{DISP}$), die eine 2D-Dispersion darstellt, die durch die Pixelanordnung eingeführt wird, eines zweiten Skalierungsfaktors ($\beta$) durch Schätzen eines Ausmaßes der 2D-Dispersion, die in dem Eingabebild vorliegt;
Generieren von Pixelversatzwerten ($\beta.I_{DISP}(x,y)$) basierend auf dem Produkt des zweiten Skalierungsfaktors mit den Werten der Matrix; und
Generieren eines korrigierten Bildes ($I_C$') durch Anwenden der Spalten- der Pixelversatzwerte.

2. Verfahren nach Anspruch 1, das weiter Generieren eines teilweise korrigierten Bildes ($I_{cc}$) basierend auf den Spaltenversatzwerten aufweist, wobei der zweite Skalierungsfaktor basierend auf dem teilweise korrigierten Bild generiert wird.

3. Verfahren nach Anspruch 1 oder 2, wobei der Spaltenvektor ($V_{COL}$) und die Dispersionsmatrix ($I_{DISP}$) bestimmt werden basierend auf einem Referenzbild ($I_{REF}$), das Versätze darstellt, die durch die Pixelanordnung und die assoziierten Referenzpixel eingeführt werden.

4. Verfahren nach einem der Ansprüche 1 bis 3, wobei das korrigierte Bild ($I_c$') basierend auf der folgenden Gleichung generiert wird:

$$I_C' = I_B(x,y) - \alpha I_{COL}(x,y) - \beta I_{DISP}(x,y)$$

wobei $I_B(x,y)$ des Eingabebild ist, $\alpha$ der erste Skalierungsfaktor ist, $I_{COL}(x,y)$ eine Matrix ist, die in jeder ihrer Zeilen den Spaltenvektor aufweist, β der zweite Skalierungsfaktor ist und $I_{DISP}(x,y)$ die Dispersionsmatrix ist.

5. Verfahren nach Anspruch 1 oder 2, wobei:

der Spaltenvektor ($V_{COL}$) die Differenz darstellt zwischen einem ersten Spaltenvektor $(I_{COL}^{T0})$, der auf einem ersten Referenzbild basiert, das bei einer ersten Umgebungstemperatur (T0) aufgenommen wird, und einem zweiten Spaltenvektor $(I_{COL}^{T1})$, der auf einem zweiten Referenzbild basiert, das bei einer zweiten Umgebungstemperatur (T1) aufgenommen wird;

die Dispersionsmatrix ($I_{DISP}$) die Differenz darstellt zwischen einer ersten Dispersionsmatrix $(I_{DISP}^{T0})$, die auf dem ersten Referenzbild basiert, und einer zweiten Dispersionsmatrix $(I_{DISP}^{T1})$, die auf dem zweiten Referenzbild basiert.

6. Verfahren nach Anspruch 5, wobei das korrigierte Bild ($I_c'$) basierend auf folgender Gleichung generiert wird:

$$I_C' = I_B(x,y) - I_{COL}^{T0}(x,y) - I_{DISP}^{T0}(x,y) - \alpha\left(I_{COL}'(x,y)\right) - \beta\left(I_{DISP}'(x,y)\right)$$

wobei $I_B(x,y)$ des Eingabebild ist, $\alpha$ der erste Skalierungsfaktor ist, $I_{COL}^{T0}(x,y)$ eine Matrix ist, die in jeder ihrer Zeilen den ersten Spaltenvektor aufweist, $I_{COL}'(x,y)$ eine Matrix gleich $I'_{COL} = \left(I_{COL}^{T1} - I_{COL}^{T0}\right)$ ist, wobei $I_{COL}^{T1}$ Matrix ist, die in jeder ihrer Zeilen den zweiten Spaltenvektor aufweist, β der zweite Skalierungsfaktor ist, $I_{DISP}^{T0}(x,y)$ die erste Dispersionsmatrix ist und $I'_{DISP}(x,y)$ eine Matrix gleich $I'_{DISP} = \left(I_{DISP}^{T1} - I_{DISP}^{T0}\right)$ ist, wobei $I_{DISP}^{T1}$ die zweite Dispersionsmatrix ist.

7. Verfahren nach einem der Ansprüche 1 bis 6, das weiter Bestimmen, basierend auf dem korrigierten Bild ($I_c'$) wenigstens eines Spaltenresiduumversatzwertes (510) aufweist.

8. Verfahren nach Anspruch 7, wobei das Bestimmen des wenigstens einen Spaltenresiduumversatzwertes Folgendes aufweist:

Bestimmen von Gewichtungen ($W_{x,y}$), die mit wenigstens einigen der Pixeln des korrigierten Bildes assoziiert sind, wobei die Gewichtungen generiert werden basierend auf einer Schätzung der Gleichförmigkeit der Nachbarschaft jedes des wenigstens einigen Pixels;
Berechnen, für jedes der wenigstens einigen Pixel, der Differenz in Bezug auf einen Pixelwert in einer entsprechenden Zeile einer angrenzenden bzw. benachbarten Spalte; und
Anwenden der Gewichtungen auf die Differenzen und Integrieren der gewichteten Differenzen zum Generieren des wenigstens einen Spaltenresiduumversatzwertes.

9. Verfahren nach Anspruch 8, wobei die Schätzung der Gleichförmigkeit der Umgebung jedes der wenigstens einigen Pixel auf einem Gradientenwert $(P_{x,y}^{\nabla})$ und einem horizontalen Varianzwert $(P_{x,y}^{VAR})$ berechnet für jede Umgebung basiert.

10. Verfahren nach einem der Ansprüche 1 bis 9, wobei das Bestimmen des ersten Skalierungsfaktors Folgendes aufweist:

Anwenden eines Hochpassfilters entlang der Zeilen des Bildes;
Anwenden des Hochpassfilters auf den Spaltenvektor; und
Bestimmen von Spaltenmittelwerten des gefilterten Bildes, wobei der erste Skalierungsfaktor bestimmt wird basierend auf einer Minimierung der Differenzen zwischen den Spaltenmittelwerten des gefilterten Bildes und den gefilterten Werten des Spaltenvektors.

**11.** Verfahren nach einem der Ansprüche 1 bis 10, wobei der erste Skalierungsfaktor $\alpha$ basierend auf der folgenden Gleichung bestimmt wird:

$$\alpha = \frac{\sum_x \left( \frac{1}{m} \sum_y T\big(I_B(x,y)\big) \times T\big(V_{COL}(x)\big) \right)}{\sum_x T\big(V_{COL}(x)\big) \times T\big(V_{COL}(x)\big)}$$

wobei $T()$ ein Hochpassfilter darstellt, das auf den Spaltenvektor $V_{COL}$ und auf die Zeilen des Eingabebildes $I_B(x,y)$ angewandt wird.

**12.** Verfahren nach einem der Ansprüche 1 bis 11, wobei das Bestimmen des zweiten Skalierungsfaktors Folgendes aufweist:

Bestimmen, für jedes Pixel des Eingabebildes und für jedes Element der Dispersionsmatrix, eines Gradientenwertes basierend auf wenigstens einem angrenzenden Pixel, wobei der zweite Skalierungsfaktor basierend auf einer Minimierung der Differenz zwischen den Gradienten des Eingabebildes und den Gradienten der Dispersionsmatrix bestimmt wird.

**13.** Verfahren nach einem der Ansprüche 1 bis 12, wobei der zweite Skalierungsfaktor $\beta$ basierend auf der folgenden Gleichung bestimmt wird:

$$\beta = \frac{\sum\big(\nabla_x I_B \cdot \nabla_x I_{DISP} + \nabla_y I_B \cdot \nabla_y I_{DISP}\big)}{\sum\big((\nabla_x I_{DISP})^2 + (\nabla_y I_{DISP})^2\big)}$$

wobei $I_B$ das Eingabebild ist, $I_{DISP}$ die Dispersionsmatrix ist, $\nabla_x$ der Pixelgradientenwert zwischen benachbarten Pixeln in der Zeilenrichtung in dem Eingabebild ist und $\nabla_y$ der Pixelgradientenwert in der Spaltenrichtung in dem Eingabebild ist.

**14.** Verfahren nach einem der Ansprüche 1 bis 13, wobei die Spalten- und Pixelversatzwerte auf ein weiteres Eingabebild angewandt werden.

**15.** Verfahren nach einem der Ansprüche 1 bis 14, das weiter Bestimmen eines Verstärkungsfaktorwertes ($\gamma$) durch Lösen des folgenden Minimierungsproblems aufweist:

$$\gamma = \arg_\gamma \min \big( var(Gain \times I_C{}' - \gamma \times Gain) \big)$$

wobei var die Varianz ist, $I_C{}'$ das korrigierte Bild ist und Gain eine Gain- bzw. Verstärkungsmatrix ist.

**16.** Eine Bildverarbeitungseinrichtung, die Folgendes aufweist:

einen Speicher (306), der einen Spaltenvektor ($V_{COL}$) und eine Dispersionsmatrix ($I_{DISP}$) speichert;
eine Verarbeitungseinrichtung (302), die ausgelegt ist zum:

Empfangen eines Eingabebildes ($I_B$), das durch eine Pixelanordnung (102) erfasst wurde, die bezüglich Infrarotstrahlung empfindlich ist, wobei die Pixelanordnung eine Vielzahl von Pixelspalten (C1, C2) hat, wobei jede Pixelspalte mit einem entsprechenden Referenzpixel (106) assoziiert ist;
Bestimmen, basierend auf dem Eingabebild und auf dem Spaltenkomponentenvektor ($V_{COL}$), der eine Spaltenspreizung darstellt, die durch die Referenzpixel (106) eingeführt wird, eines ersten Skalierungsfak-tors ($\alpha$) durch Schätzen eines Levels bzw. Ausmaßes der Spaltenspreizung, die in dem Eingabebild vorliegt;
Generieren von Spaltenversatzwerten ($\alpha.V_{COL}(x)$) basierend auf dem Produkt des ersten Skalierungsfaktors mit den Werten des Vektors;
Bestimmen, basierend auf dem Eingabebild und auf der 2D-Dispersionsmatrix, die eine 2D-Dispersion darstellt, die durch die Pixelanordnung eingeführt wird, eines zweiten Skalierungsfaktors ($\beta$) durch Schätzen eines Ausmaßes der 2D-Dispersion, die in dem Eingabebild vorliegt;

Generieren von Pixelversatzwerten ($\beta.I_{DISP}(x,y)$) basierend auf dem Produkt des zweiten Skalierungsfaktors mit den Werten der Matrix; und

Generieren eines korrigierten Bildes ($I_c$') durch Anwenden der Spalten- und Pixelversatzwerte.

**Claims**

1. A method of image processing comprising:

   receiving, by a processing device (302), an input image ($I_B$) captured by a pixel array (102) sensitive to infrared radiation, the pixel array having a plurality of pixel columns (C1, C2), each pixel column being associated with a corresponding reference pixel (106);

   determining, based on the input image and on a column component vector ($V_{COL}$) representing column spread introduced by the reference pixels (106), a first scale factor ($\alpha$) by estimating a level of said column spread present in the input image;

   generating column offset values ($\alpha.V_{COL}(x)$) based on the product of the first scale factor with the values of said vector;

   determining, based on the input image and on a 2D dispersion matrix ($I_{DISP}$) representing 2D dispersion introduced by the pixel array, a second scale factor ($\beta$) by estimating a level of said 2D dispersion present in the input image;

   generating pixel offset values ($\beta.I_{DISP}(x,y)$) based on the product of the second scale factor with the values of said matrix; and

   generating a corrected image ($I_C$') by applying said column and pixel offset values.

2. The method of claim 1, further comprising generating a partially corrected image ($I_{CC}$) based on said column offset values, wherein said second scale factor is generated based on said partially corrected image.

3. The method of claim 1 or 2, wherein said column vector ($V_{COL}$) and dispersion matrix ($I_{DISP}$) are determined based on a reference image ($I_{REF}$) representing offsets introduced by the pixel array and the associated reference pixels.

4. The method of any of claims 1 to 3, wherein said corrected image ($I_C$') is generated based on the equation:

$$I_C{}' = I_B(x,y) - \alpha I_{COL}(x,y) - \beta I_{DISP}(x,y)$$

   where $I_B(x,y)$ is the input image, $\alpha$ is the first scale factor, $I_{COL}(x,y)$ is a matrix comprising in each of its rows the column vector, $\beta$ is the second scale factor, and $I_{DISP}(x,y)$ is the dispersion matrix.

5. The method of claim 1 or 2, wherein:

   the column vector ($V_{COL}$) represents the difference between a first column vector $(I_{COL}^{T0})$ based on a first reference image taken at a first ambient temperature (T0) and a second column vector $(I_{COL}^{T1})$ based on a second reference image taken at a second ambient temperature (T1) ;

   the dispersion matrix ($I_{DISP}$) represents the difference between a first dispersion matrix $(I_{DISP}^{T0})$ based on said first reference image and a second dispersion matrix $(I_{DISP}^{T1})$ based on said second reference image.

6. The method of claim 5, wherein said corrected image ($I_C$') is generated based on the equation:

$$I_C' = I_B(x,y) - I_{COL}^{T0}(x,y) - I_{DISP}^{T0}(x,y) - \alpha\left(I_{COL}'(x,y)\right) - \beta\left(I_{DISP}'(x,y)\right)$$

   where $I_B(x,y)$ is the input image, $\alpha$ is the first scale factor, $I_{COL}^{T0}(x,y)$ is a matrix comprising in each of its rows the first column vector, $I'_{COL}(x,y)$ is a matrix equal to $I'_{COL} = (I_{COL}^{T1} - I_{COL}^{T0})$, where $I_{COL}^{T1}$ is a matrix comprising in each of its rows the second column vector, β is the second scale factor, $I_{DISP}^{T0}(x,y)$ is the first dispersion matrix and $I'_{DISP}(x,y)$ is a matrix equal to $I'_{DISP} = (I_{DISP}^{T1} - I_{DISP}^{T0})$, where $I_{DISP}^{T1}$ is the second dispersion matrix.

7. The method of any of claims 1 to 6, further comprising determining based on said corrected image ($I_C'$) at least one column residue offset value (510).

8. The method of claim 7, wherein determining said at least one column residue offset value comprises:

determining weights ($w_{x,y}$) associated with at least some of the pixels of said corrected image, the weights being generated based on an estimation of the uniformity of the neighborhood of each of said at least some pixels;
calculating, for each of the at least some pixels, the difference with respect to a pixel value in a corresponding row of an adjacent column; and
applying the weights to said differences and integrating the weighted differences to generate the at least one column residue offset value.

9. The method of claim 8, wherein the estimation of the uniformity of the neighborhood of each of said at least some pixels is based on a gradient value $(P_{x,y}^{\nabla})$ and on a horizontal variance value $(P_{x,y}^{VAR})$ calculated for each neighborhood.

10. The method of any of claims 1 to 9, wherein determining the first scale factor comprises:

applying a high-pass filter along the rows of the image;
applying said high-pass filter to the column vector; and
determining column averages of the filtered image, wherein the first scale factor is determined based on a minimization of the differences between the column averages of the filtered image and the filtered values of the column vector.

11. The method of any of claims 1 to 10, wherein the first scale factor α is determined based on the following equation:

$$\alpha = \frac{\sum_x \left( \frac{1}{m} \sum_y T(I_B(x,y)) \times T(V_{COL}(x)) \right)}{\sum_x T(V_{COL}(x)) \times T(V_{COL}(x))}$$

where T() represents a high pass filter applied to the column vector $V_{COL}$ and to the rows of the input image $I_B(x,y)$.

12. The method of any of claims 1 to 11, wherein determining the second scale factor comprises:

determining, for each pixel of the input image and for each element of the dispersion matrix, a gradient value based on at least one adjacent pixel, wherein the second scale factor is determined based on a minimization of the difference between the gradients of the input image and the gradients of the dispersion matrix.

13. The method of any of claims 1 to 12, wherein the second scale factor β is determined based on the following equation:

$$\beta = \frac{\sum (\nabla_x I_B \cdot \nabla_x I_{DISP} + \nabla_y I_B \cdot \nabla_y I_{DISP})}{\sum ((\nabla_x I_{DISP})^2 + (\nabla_y I_{DISP})^2)}$$

where $I_B$ is the input image, $I_{DISP}$ is the dispersion matrix, $\nabla_x$ is the pixel gradient value between adjacent pixels in the row direction in the input image, and $\nabla_y$ is the pixel gradient value in the column direction in the input image.

14. The method of any of claims 1 to 13, wherein said column and pixel offset values are applied to a further input image.

**15.** The method of any of claims 1 to 14, further comprising determining a gain correction value ($\gamma$) by resolving the following minimization problem:

$$\gamma = \arg\min_{\gamma} \left( var(Gain \times I_C{}' - \gamma \times Gain) \right),$$

where var is the variance, $I_C{}'$ is the corrected image, and Gain is a gain matrix.

**16.** An image processing device comprising:

a memory (306) storing a column vector ($V_{COL}$) and a dispersion matrix ($I_{DISP}$);
a processing device (302) adapted to:

receive an input image ($I_B$) captured by a pixel array (102) sensitive to infrared radiation, the pixel array having a plurality of pixel columns (C1, C2), each pixel column being associated with a corresponding reference pixel (106);
determine, based on the input image and on the column vector representing column spread introduced by the reference pixels, a first scale factor ($\alpha$) by estimating a level of said column spread present in the input image;
generate column offset values ($\alpha$-$V_{COL}$(x)) based on the product of the first scale factor with the values of said vector;
determine, based on the input image and on the dispersion matrix representing 2D dispersion introduced by the pixel array, a second scale factor ($\beta$) by estimating a level of said 2D dispersion present in the input image;
generate pixel offset values ($\beta$.$I_{DISP}$(x,y)) based on the product of the second scale factor with the values of said matrix; and
generate a corrected image ($I_C{}'$) by applying said column and pixel offset values.

Fig 1

Fig 2

MÉMOIRE
D'INSTRUCTIONS — 304

112

$I_B$ → DISPOSITIF
DE
TRAITEMENT — 302 → $I_C$

MÉMOIRE — 306

GAIN

$V_{COL}$        $I_{DISP}$

Fig 3

DÉTERMINER UN FACTEUR D'ÉCHELLE $\alpha$
D'UNE COMPOSANTE DE COLONNES
$V_{COL}$ DANS L'IMAGE $I_B$ — 401

DÉTERMINER UN FACTEUR D'ÉCHELLE $\beta$
D'UNE COMPOSANTE NON-LIÉE AUX
COLONNES DANS L'IMAGE $I_B$ — 402

$I_C' = I_B(x,y) - \alpha\ I_{COL}(x,y) - \beta\ I_{DISP}(x,y)$ — 403

CORRECTION EN GAIN — 404

SUPPRIMER LES RÉSIDUS — 405

Fig 4

Fig 5

Fig 6

Fig 7

**RÉFÉRENCES CITÉES DANS LA DESCRIPTION**

**Documents brevets cités dans la description**

- US 20100085438 A
- WO 2004107728 A
- EP 2632150 A